(19) Europäisches Patentamt
European Patent Office
Office européen des brevets

(11) **EP 3 076 702 B1**

(12) **EUROPEAN PATENT SPECIFICATION**

(45) Date of publication and mention
of the grant of the patent:
**06.11.2019 Bulletin 2019/45**

(51) Int Cl.:
***H04W 24/08*** *(2009.01)*     *H04W 52/14* *(2009.01)*
***H04W 52/24*** *(2009.01)*

(21) Application number: **15196497.0**

(22) Date of filing: **26.11.2015**

(54) **METHOD AND SYSTEM FOR DETERMINING SIGNAL PENETRATION OF ONE OR MORE NEIGHBOR BASE STATIONS**

VERFAHREN UND SYSTEM ZUR BESTIMMUNG DER SIGNALPENETRATION EINER ODER MEHRERER BENACHBARTER BASISSTATIONEN

PROCÉDÉ ET SYSTÈME DE DÉTERMINATION DE PÉNÉTRATION D'UN SIGNAL D'UNE OU DE PLUSIEURS STATIONS DE BASE VOISINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2015 IN 1606CH2015**
           **23.06.2015 US 201514748080**

(43) Date of publication of application:
**05.10.2016 Bulletin 2016/40**

(73) Proprietor: **Wipro Limited**
**560 035 Karnataka (IN)**

(72) Inventors:
- **CHAUDHURI, Saptarshi**
**560068 Karnataka (IN)**
- **MANNA, Avijit**
**700039 West Bengal (IN)**
- **PAL, Shyam Sundar**
**700039 West Bengal (IN)**

(74) Representative: **Finnegan Europe LLP**
**1 London Bridge**
**London SE1 9BG (GB)**

(56) References cited:
**US-A1- 2011 256 833**     **US-B1- 8 862 134**

- **ERICSSON ET AL: "Proposed solution for eCoMP", 3GPP DRAFT; R3-141304_ECOMP_SOLUTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Seoul, South Korea; 20140519 - 20140523 18 May 2014 (2014-05-18), XP050790855, Retrieved from the Internet: URL:http://www.3gpp.org/ftp/Meetings_3GPP_ SYNC/RAN1/RAN3/Docs/ [retrieved on 2014-05-18]**

## Description

Technical Field

This disclosure relates generally to the signal coverage of base stations, and more particularly to a method and system for determining signal penetration of one or more neighbor base stations into the coverage area of a serving base station.

Background

In a broadband wireless network, several base stations may be deployed to provide the desired service coverage to end users using mobile user equipment (UE). A base station provides the signal coverage or cell coverage over an area based on the transmitting power of the base station. Some limitations which impact the end user service quality may include call continuity and call quality which are impacted by cell coverage and signal level. Hence, inadequate cell coverage and improper signal level may impact end user service quality and cost of operations.

To address the above need, base stations may be deployed such that there is some overlapped area between them so that proper handover takes place in order to maintain call continuity and hence service quality. Typically, the overlap zones are designed initially based on standard mechanisms. However, the actual field of the network, the actual overlap zones and the extent of coverage may be impacted based on factors like landscape (obstruction, reflections etc.) and operating environment (noise, humidity, wind, etc.). This may lead to unwanted penetration of signal into a neighbouring base station's coverage area and also may lead to above or below threshold-overlap-coverage among neighbouring base stations.

US 2011/0256833 A1 discloses a method executed by a device in a network. The device selects one or more cells in the network and coordinates transmissions from the selected one or more cells and from neighbor cells of the selected one or more cells so that transmissions of the selected one or more cells do not interfere with reference signals transmitted by the neighbor cells at designated times. The device receives from the user equipment served by the selected one or more cells measurement reports associated with the reference signals transmitted by the neighbor cells and determines signal strengths of the neighbor cells based on the measurement reports. The device also determines, based on the signal strengths, whether the network coverage is sufficient when coverage of the selected one or more cells is reduced or when the selected one or more cells are out of service.

3GPP TSG-RAN3 Meeting #84 - R3-141304 proposes a solution for Inter eNB CoMP for LTE in non-ideal backhaul using means of X2 signaling.

## SUMMARY

In accordance with aspects of the invention, there are provided a method for determining signal penetration of one or more neighbor base stations into a coverage area of a serving base station, a signal penetration computing device (300) for determining signal penetration of one or more neighbor base stations, and a not-transitory computer readable medium as set out in claims 1, 7, and 8 respectively.

In one embodiment, a method of determining signal penetration of one or more neighbor base stations is disclosed. The method comprises: receiving one or more measurement reports from one or more User Equipment (UEs) associated with a serving base station, wherein the one or more measurement reports comprise Reference Signal Received Power (RSRP) values of the one or more neighbor base stations; identifying a location of each of the one or more UEs based on the one or more measurement reports; determining a distance between one or more pairs of UEs based on the location of the each UE; defining one or more penetration areas based on the one or more distances between the one or more pairs of UEs , wherein the one or more penetration areas are associated with the one or more neighbor base stations; and determining, by the signal penetration computing device, signal penetration in the one or more penetration areas based on the one or more pairs of UEs associated with each of the penetration areas.

In another embodiment, a signal penetration computing device for determining signal penetration of one or more neighbor base stations is disclosed. The signal penetration computing device comprises a processor; and a memory communicatively coupled to the processor, wherein the memory stores processor-executable instructions, which, on execution, cause the processor to: receive one or more measurement reports from one or more User Equipment (UEs) associated with a serving base station, wherein the one or more measurement reports comprise Reference Signal Received Power (RSRP) values received by UEs of the one or more neighbor base stations; identify a location of each of the one or more UEs based on the one or more measurement reports; determine a distance between one or more pairs of UEs based on the location of the each UE; define one or more penetration areas based on the one or more distances between the one or more pairs of UEs , wherein the one or more penetration areas are associated with the one or more neighbor base stations; and determine signal penetration in the one or more penetration areas based on the one or more pairs of UEs associated with each of the penetration areas.

There is also provided a signal penetration computing device for determining signal penetration of one or more neighbor base stations, comprising: a processor; and a memory communicatively coupled to the processor, wherein the memory stores processor-executable instructions, which, on execution, cause the processor to: receive one or more measurement reports from one or more user equipment (UEs) associated with a serving base station, wherein the one or more measurement reports comprise reference signal received power (RSRP) values received by UEs of the one or more neighbor base stations; identify a location of each of the one or more UEs based on the one or more measurement reports; determine a distance between one or more pairs of UEs based on the location of the each UE; define one or more penetration areas based on the one or more distances between the one or more pairs of UEs, wherein the one or more penetration areas are associated with the one or more neighbor base stations; and determine signal penetration in the one or more penetration areas based on the one or more pairs of UEs associated with each of the penetration areas.

The signal penetration in the one or more penetration areas may be determined using a path loss method.

The instructions may further cause the processor to filter the one or more neighbor base stations based on the RSRP values of the one or more neighbor base stations.

The one or more penetration areas may be defined based on the one or more distances between the one or more pairs of UEs being below a predefined distance threshold.

The instructions may further cause the processor to predict signal penetration for one or more locations where no UEs are present based on measurement reports associated with one or more UEs in proximity to the locations where no UEs are present.

There is further provided a non-transitory computer readable medium comprising a set of computer executable instructions, which, when executed on a computing system cause the computing system to perform the steps of: receiving one or more measurement reports from one or more user equipment (UEs) associated with a serving base station, wherein the one or more measurement reports comprise reference signal received power (RSRP) values of the one or more neighbor base stations; identifying a location of each of the one or more UEs based on the one or more measurement reports; determining a distance between one or more pairs of UEs based on the location of the each UE; defining one or more penetration areas based on the one or more distances between the one or more pairs of UEs , wherein the one or more penetration areas are associated with the one or more neighbor base stations; and determining signal penetration in the one or more penetration areas based on the one or more pairs of UEs associated with each of the penetration areas.

The signal penetration in the one or more penetration areas may be determined using a path loss method.

The medium may further comprise instructions to filter the one or more neighbor base stations based on the RSRP values of the one or more neighbor base stations.

The one or more penetration areas may be defined based on the one or more distances between the one or more pairs of UEs being below a predefined distance threshold.

The medium may further comprise instructions to predict signal penetration for one or more locations where no UEs are present based on measurement reports associated with one or more UEs in proximity to the locations where no UEs are present.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles.

FIG. 1 illustrates an exemplary broadband wireless network architecture in which various embodiments of the present disclosure may function.

FIG. 2 illustrates a flow chart of a method of determining signal penetration of one or more neighbor base stations according to some embodiments of the present disclosure.

FIG. 3 is a functional block diagram of a signal penetration computation device according to some embodiments of the present disclosure.

FIG. 4 is a block diagram of an exemplary computer system for implementing embodiments consistent with the present disclosure.

## DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

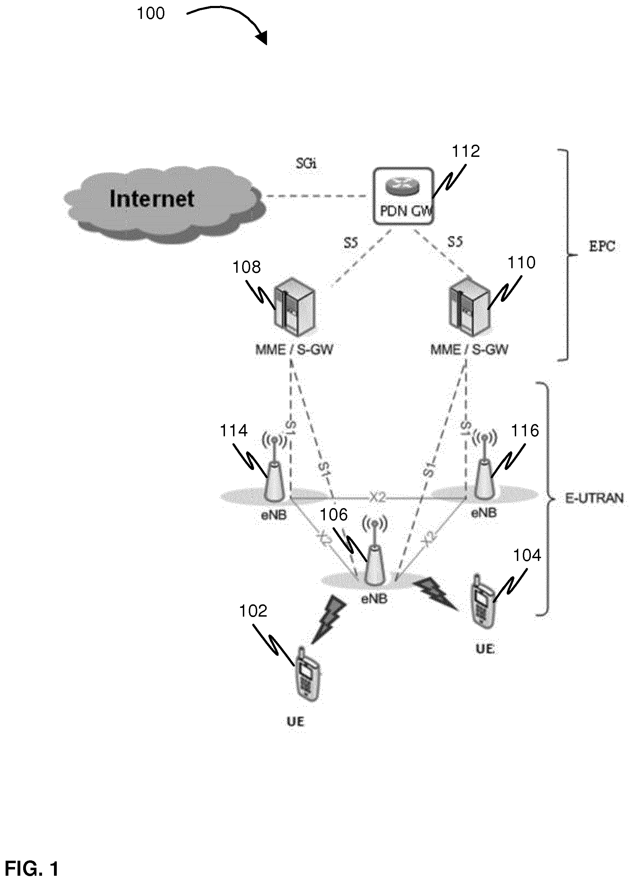

An exemplary high level network 100 depicting a broadband wireless network architecture is illustrated in FIG. 1. For purposes of illustration, the network 100 corresponds to an LTE (long-term evolution) network. However, the depicted LTE network is merely an exemplary network, and thus it will be understood that the teachings of the disclosure contemplate other broadband wireless networks such as WiMax, High Speed Packet Access (3GPP's HSPA), etc.

In FIG. 1, one or more user equipment (UE) such as UE 102 and UE 104 may communicate wirelessly with a base station (BS) 106 that is an LTE base station. In this case, BS 106 acts as the serving BS for both UE 102 and UE 104. The functionalities of BS 106 may include radio resource management (RRM), header compression and encryption of user data stream, packet scheduling and transmission, physical layer processing, etc. An example of a UE may be a cell phone, PDA, tablet computer, etc. The BS 106 may communicate with an evolved packet core (EPC) that may include a mobility management entity (MME) associated with a serving gateway (S-GW). The MME and the S-GW are represented together in FIG. 1 as MME / S-GW 108 and MME / S-GW 110 for the sake of simplicity. However, it is to be noted that the MME and the S-GW in some embodiments may be separate and distinct entities. The MME manages and stores a UE context and further generates temporary identities and allocates them to UEs. The S-GW routes and forwards user data packets, while also acting as the mobility anchor for the user plane during inter-BS handovers and as the anchor for mobility between LTE and other 3GPP technologies. Network 100 may further include a packet data network gateway (PDN GW) 112 that provides connectivity to UE 102 and UE 104 to external packet data networks by being the point of exit and entry of traffic for UE 102 and UE 104. A UE may have simultaneous connectivity with more than one PDN GW for accessing multiple PDNs. The PDN GW performs policy enforcement, packet filtering for each user, charging support, lawful interception, etc.

In addition to the serving BS 106, network 100 may further include neighboring BSs such as a BS 114 and a BS 116. It is to be noted that, while only BS 114 and BS 116 are illustrated as neighbors in FIG. 1 for sake of simplicity, serving BS 106 may have any number of neighbors. The serving BS 106 may maintain a neighbor relation table (NRT) that provides information corresponding to neighboring BSs. The NRT may be used by serving BS 106 to determine which neighbor to hand over a UE to. BS 106 may discover neighbor BS 116 using an automatic neighbor relation (ANR) function. Here, the serving BS 106 may receive measurement reports from all UEs currently served by the BS 106; that is, from UE 102 and UE 104. The measurement reports may include various signal strength measurements between the UE and a number of BSs in the vicinity of the UE. In this case, UE 104 may detect a signal from BS 116 and accordingly provide this information to serving BS 106. The serving BS 106 may check its own NRT to verify if BS 116 has been added as a neighbor. On determining that BS 116 is not on the NRT, serving BS 106 may update the NRT to include the discovered neighbor BS 116.

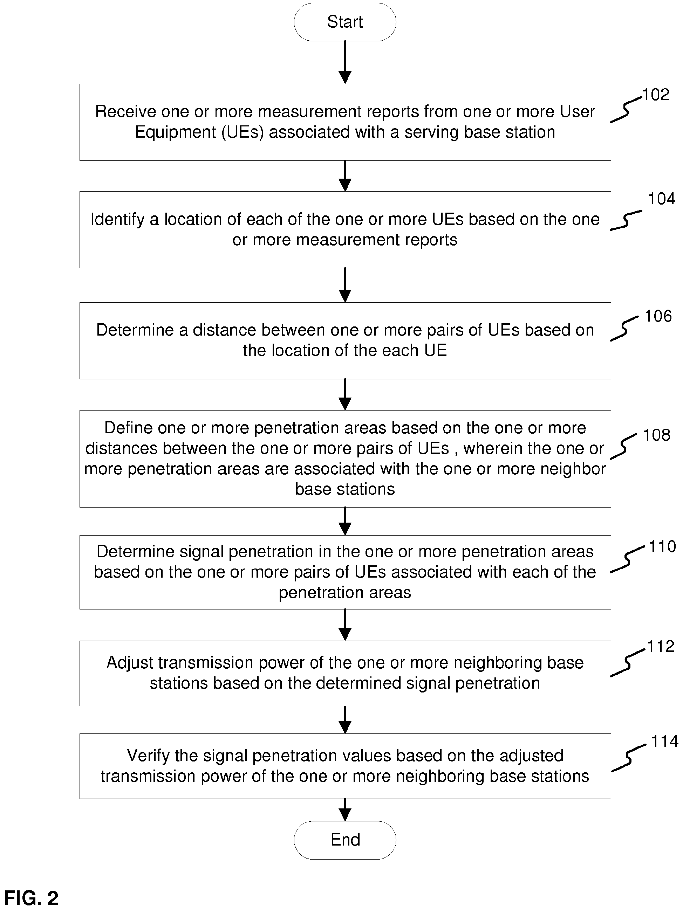

FIG. 2 illustrates a flow chart of a method of determining signal penetration of one or more neighbor base stations into the coverage area of a serving base station in accordance with some embodiments of the invention. At step 102, a signal penetration computing device may receive one or more measurement reports from one or more user equipment (UEs) associated with a serving base station (BS). Here, the one or more UEs may be currently served by the serving BS. The one or more measurement reports may include, among other parameters, a signal strength measurement of BSs neighboring the serving base station. In some embodiments, the signal strength measurements may correspond to reference signal received power (RSRP) values. The UEs measure the RSRP values of neighboring BSs while being served by the serving base station and provide this information to the serving base station. In some embodiments, the RSRP values of the neighboring BSs as measured by the UEs may be compared with a predefined RSRP threshold value. The measurements that exceed the predefined RSRP threshold may be considered for subsequent steps. If a UE measured RSRP value of a particular neighbor BS is below the RSRP threshold, then that UE may not be considered for determining signal penetration of that particular neighbor BS. Thus, one or more neighbor BSs may be filtered from consideration in case the RSRP values of the one or more neighbor BSs are below a predefined the predefined RSRP threshold.

On receiving the measurement reports from the various UEs, a location of each UE may be identified based on the measurement reports at step 104. The global navigation satellite system (GNSS) location included in the measurement reports may be used to determine the location of the UEs. In some embodiments, the coverage area of the serving BS may be divided into sectors and the location of each UE may be determined within a corresponding sector. The coverage area of the serving BS may be divided into different sectors to account for the signal transmission strength of the serving BS being different in different directions.

Thereafter, at step 106, a distance between one or more pairs of UEs may be determined based on the location of the UEs. In other words, a distance between a first UE and each of the other UEs from which measurement reports were received is determined. Distances between a particular UE and all other UEs may be determined based on the locations of the UEs. For example, if there are four UEs, then a distance between the first UE and the second UE, distance between the first UE and the third UE, and distance between the first UE and the fourth UE may be determined. Similarly, a distance between the second UE and the third UE and distance between the second UE and fourth UE may be determined. This may be done until distances between all pairs of UEs are determined. Each such UE may be considered a measurement point.

On determining distances between possible pairs of UEs, one or more penetration areas may be defined at step 108. A penetration area in this context may be formed by three or more measurement points. If the distance between any two measurement points is below a predefined distance threshold distance, then those measurement points may be considered as candidates for defining a penetration area. A penetration area may be a triangular or quadrangular shape area defined by three or more measurement points or UEs. The three or more measurement points may be selected to form a penetration area if the distance between each pair of UEs that make up the three or more measurement points is less than the predefined distance threshold. The one or more penetration areas may be associated with the one or more neighboring BSs; that is, each penetration area may correspond to a signal penetration from a particular neighbor BS. Since each UE receives RSRP values from various neighboring BSs, the RSRP values for a particular neighbor as measured by various UEs may be used to define a penetration area for that particular neighboring BS. In case there are no UEs in certain areas of the coverage areas and hence no measurement reports associated with such areas, the signal penetration of neighboring BSs may be predicted from the measurement reports of UEs in close proximity to the areas where no UEs are present.

Upon determining the one or more penetration areas associated with the one or more neighboring BSs, signal penetration of the one or more neighboring BSs in these penetration areas is determined at step 110. The signal penetration of the various neighbor BSs may be determined based on the RSRP values of the various neighbor BSs measured by the UEs that form the vertices of the one or more penetration areas. The signal penetration from the neighboring BSs into the coverage area of the serving BS may be determined by using a path loss method for each of the vertices that make up a particular penetration area. In other words, the signal penetration of a particular neighboring BS may be determined using path loss method on the RSRP values of the particular neighboring BS measured by the UEs that make up the penetration area for which the signal penetration is to be determined.

In some embodiments, once the signal penetration of the neighboring BSs are determined, the transmission signal power values of the neighboring BSs may be adjusted in order to minimize the signal penetration into the coverage area of the serving BS at step 112. The transmission signal value may be corrected based on a comparison between the actual signal penetration determined and the expected signal penetration as given by:

$$BS_{power\_\Delta} = BS_{power\_expected} - BS_{power\_actual}$$

Once the transmission signal power of the neighboring BSs have been corrected, the signal penetration of the neighboring BSs may be verified by comparing the previously determined signal penetration with a current signal penetration (determined after correcting the neighboring BS's transmission power) at step 114. If the deviation is below a predefined error threshold, then the signal penetration value may be considered accurate.

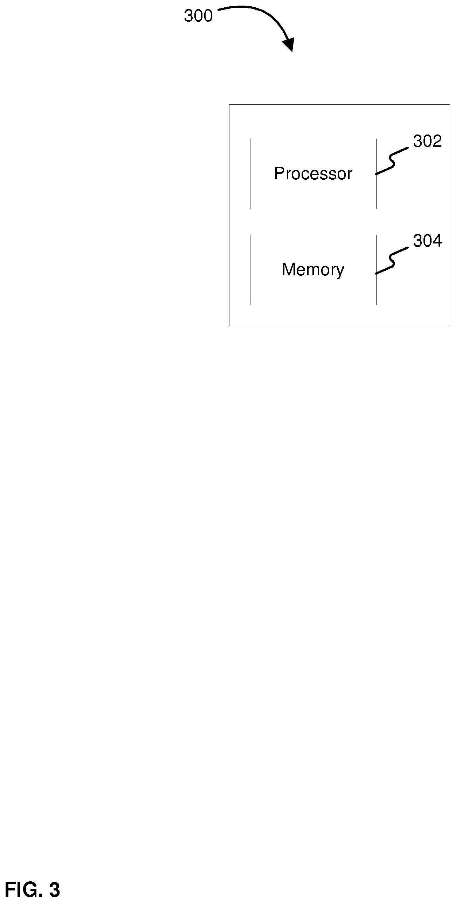

A signal penetration computing device 300 for determining signal penetration of one or more neighbor base stations (BSs) will now be described with reference to FIG. 3. FIG. 3 illustrates a block diagram of a signal penetration computing device 300 in accordance with some embodiments of the present disclosure. Signal penetration computing device 300 may include a processor 302 and a memory 304 communicatively coupled to processor 302, wherein memory 304 stores processor-executable instructions. The instructions, on execution, may cause processor 302 to receive one or more measurement reports from one or more user equipment (UEs) associated with a serving BS. The one or more measurement reports may include, among other parameters, a signal strength measurement of BSs neighboring the serving base station. In some embodiments, the signal strength measurements may correspond to reference signal received power (RSRP) values. The UEs measure the RSRP values of neighboring BSs while being served by the serving base station and provide this information to signal penetration computing device 300. In some embodiments, processor 302 may compare the RSRP values of the neighboring BSs as measured by the UEs with a predefined RSRP threshold value. The measurements that exceed the predefined RSRP threshold may be considered for subsequent steps. If a UE measured RSRP value of a particular neighbor BS is below the RSRP threshold, then that UE may not be considered for determining signal penetration of that particular neighbor BS. Thus, one or more neighbor BSs may be filtered from consideration in the case that the RSRP values of the one or more neighbor BSs are below a predefined the predefined RSRP threshold.

On receiving the measurement reports from the various UEs, processor 302 may identify a location of each UE based on the measurement reports received from the UEs. In some embodiments, the coverage area of the serving BS may be divided into sectors and the location of each UE may be determined within a corresponding sector. The coverage area of the serving BS may be divided into different sectors to account for the signal transmission strength of the serving BS being different in different directions.

Processor 302 may then determine a distance between one or more pairs of UEs based on the location of the UEs. In other words, a distance between a first UE and each of the other UEs from which measurement reports were received is determined. Distances between a particular UE and all other UEs may be determined based on the locations of the UEs. Determining distances between pairs of UEs is explained in detail in conjunction with FIG. 2. On determining distances between possible pairs of UEs, processor 302 may define one or more penetration areas. A penetration area in this context may be formed by three or more measurement points as explained with reference to FIG. 2. If the distance between any two measurement points is below a predefined distance threshold distance, then those measurement points may be considered as candidates for defining a penetration area. A penetration area may be a triangular or quadrangular shape area defined by three or more measurement points or UEs. The three or more measurement points may be selected to form a penetration area if the distance between each pair of UEs that make up the three or more measurement points is less than the predefined distance threshold. Defining penetration areas associated with the one or more neighboring BSs is explained in detail in conjunction with FIG. 2. In case there are no UEs in certain areas of the coverage areas and hence no measurement reports associated with such areas, the signal penetration of neighboring BSs may be predicted from the measurement reports of UEs in close proximity to the areas where no UEs are present.

Upon determining the one or more penetration areas associated with the one or more neighboring BSs, processor 302 may determine signal penetration of the one or more neighboring BSs in these penetration areas. The signal penetration of the various neighbor BSs may be determined based on the RSRP values of the various neighbor BSs measured by the UEs that form the vertices of the one or more penetration areas. The signal penetration from the neighboring BSs into the coverage area of the serving BS may be determined by processor 302 using a path loss method for each of the vertices that make up a particular penetration area. In other words, the signal penetration of a particular neighboring BS may be determined using path loss method on the RSRP values of the particular neighboring BS measured by the UEs that make up the penetration area for which the signal penetration is to be determined.

Computer System

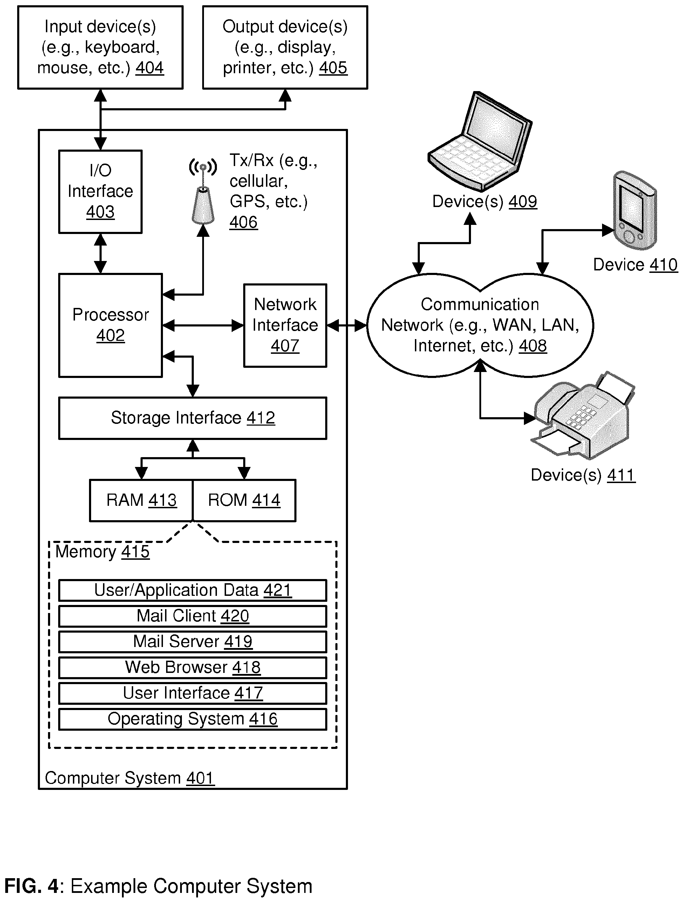

**FIG. 4** is a block diagram of an exemplary computer system for implementing embodiments consistent with the present disclosure. Variations of computer system 401 may be used for implementing signal penetration computing device 300. Computer system 401 may comprise a central processing unit ("CPU" or "processor") 402. Processor 402 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 402 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 402 may be disposed in communication with one or more input/output (I/O) devices via I/O interface 403. The I/O interface 403 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 403, the computer system 401 may communicate with one or more I/O devices. For example, the input device 404 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 405 may be a printer, fax machine, video display (e.g., cathode ray tube (CRT), liquid crystal display (LCD), light-emitting diode (LED), plasma, or the like), audio speaker, etc. In some embodiments, a transceiver 406 may be disposed in connection with the processor 402. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 402 may be disposed in communication with a communication network 408 via a network interface 407. The network interface 407 may communicate with the communication network 408. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 408 may include, without limitation, a direct interconnection, local area network (LAN), wide area network (WAN), wireless network (e.g., using Wireless Application Protocol), the Internet, etc. Using the network interface 407 and the communication network 408, the computer system 401 may communicate with devices 410, 411, and 412. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 401 may itself embody one or more of these devices.

In some embodiments, the processor 402 may be disposed in communication with one or more memory devices (e.g., RAM 413, ROM 414, etc.) via a storage interface 412. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 416, user interface application 417, web browser 418, mail server 419, mail client 420, user/application data 421 (e.g., any data variables or data records discussed in this disclosure), etc. The operating system 416 may facilitate resource management and operation of the computer system 401. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 417 may facilitate display, execution, interaction, manipulation, or operation of program components through textual or graphical facilities. For example, user interfaces may provide computer interaction interface elements on a display system operatively connected to the computer system 401, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

In some embodiments, the computer system 401 may implement a web browser 418 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 401 may implement a mail server 419 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 401 may implement a mail client 420 stored program component. The mail client may be a mail viewing application, such as Apple Mail, Microsoft Entourage, Microsoft Outlook, Mozilla Thunderbird, etc.

In some embodiments, computer system 401 may store user/application data 421, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

The specification has described a method and system for determining signal penetration of one or more neighbor base stations. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A method of determining signal penetration for one or more neighbor base stations into a coverage area of a serving base station, the method comprising:

   receiving (102), by a signal penetration computing device, measurement reports from a plurality of user equipment, UEs, associated with the serving base station, wherein the one or more measurement reports comprise reference signal received power, RSRP, values of the one or more neighbor base stations;
   comparing, by the signal penetration computing device, the RSRP values of the one or more neighbor base stations in the measurement reports with a predefined RSRP threshold to identify measurements that exceed the predefined RSRP threshold;
   identifying (104), by the signal penetration computing device, a location of each UE from the identified measurements based on the one or more measurement reports;
   determining (106), by the signal penetration computing device, distances between one or more pairs of UEs from the identified measurements based on the location of each UE, each UE being a measurement point;
   defining (108), by the signal penetration computing device, one or more penetration area based on the determined distances, wherein each penetration area is defined by three or more measurement points, the distance between any two of the three or more measurement points being below a predefined distance threshold; and
   determining (110), by the signal penetration computing device, signal penetration by the one or more neighbor base stations in the one or more penetration areas based on RSRP values of neighbor base stations measured by UEs forming vertices of the one or more penetration areas.

2. The method of claim 1, wherein the signal penetration in the one or more penetration areas is determined using a path loss method.

3. The method of claim 1 or 2, further comprising adjusting (112) transmission signal values of the one or more neighbor base stations based on the signal penetration in the one or more penetration areas.

4. The method of claim 3, further comprising determining a deviation in the signal penetration by comparing the signal penetration before and after adjusting the transmission signal values of the one or more neighbor base stations.

5. The method of claim 4, further comprising verifying (114) the signal penetration in the one or more penetration areas by comparing the deviation in signal penetration with a predefined error threshold.

6. The method of any one of claims 1 to 5, further comprising predicting signal penetration for one or more locations where no UEs are present based on measurement reports associated with one or more UEs in proximity to the locations where no UEs are present.

7. A signal penetration computing device (300) for determining signal penetration of one or more neighbor base stations, comprising:

   a processor (302); and
   a memory (304) communicatively coupled to the processor, wherein the memory stores processor-executable instructions, which, on execution, cause the processor to perform the method of any of claims 1 to 6.

8. A non-transitory computer readable medium comprising a set of computer executable instructions, which, when executed on a computing system cause the computing system to perform the method of any one of claims 1 to 6.

**Patentansprüche**

1. Verfahren zum Bestimmen von Signaldurchdringung für eine oder mehrere Nachbar-Basisstationen in einen Versorgungsbereich einer bedienenden Basisstation, wobei das Verfahren aufweist:

   ein Empfangen (102), durch eine Signaldurchdringungs-Datenverarbeitungseinheit, von Messberichten von einer Mehrzahl von Benutzergeräten, UEs, die der bedienenden Basisstation zugehörig sind, wobei der eine oder die mehreren Messberichte Werte einer Referenzsignal-Empfangsleistung, RSRP, von der einen oder den mehreren Nachbar-Basisstationen aufweisen;
   ein Vergleichen, durch die Signaldurchdringungs-Datenverarbeitungseinheit, der RSRP-Werte der einen oder der mehreren Nachbar-Basisstationen in den Messberichten mit einem vordefinierten RSRP-Schwellenwert, um Messungen zu identifizieren, die den vordefinierten RSRP-Schwellenwert überschreiten; ein Identifizieren (104), durch die Signaldurchdringungs-Datenverarbeitungseinheit, eines Standorts jedes UE aus den identifizierten Messungen auf Grundlage des einen oder der mehreren Messberichte;

ein Bestimmen (106), durch die Signaldurchdringungs-Datenverarbeitungseinheit, von Entfernungen zwischen einem oder mehreren Paaren von UEs aus den identifizierten Messungen auf Grundlage des Standorts jedes UE, wobei jedes UE ein Messpunkt ist;

ein Definieren (108), durch die Signaldurchdringungs-Datenverarbeitungseinheit, von einem oder mehreren Durchdringungsbereichen auf Grundlage der bestimmten Entfernungen, wobei jeder Durchdringungsbereich durch drei oder mehr Messpunkte definiert wird, wobei die Entfernung zwischen beliebigen zwei von den drei oder mehr Messpunkten unter einem vordefinierten Entfernungsschwellenwert liegt; und

ein Bestimmen (110), durch die Signaldurchdringungs-Datenverarbeitungseinheit, einer Signaldurchdringung von der einen oder den mehreren Nachbar-Basisstationen in dem einen oder den mehreren Durchdringungsbereichen auf Grundlage von RSRP-Werten von Nachbar-Basisstationen, die durch UEs gemessen wurde, die Scheitelpunkte des einen oder der mehreren Durchdringungsbereiche bilden.

2. Verfahren nach Anspruch 1, wobei die Signaldurchdringung in dem einem oder den mehreren Durchdringungsbereichen unter Verwendung eines Pfadverlustverfahrens bestimmt wird.

3. Verfahren nach Anspruch 1 oder 2, ferner aufweisend ein Anpassen (112) von Übertragungssignalwerten der einen oder der mehrere Nachbar-Basisstationen auf Grundlage der Signaldurchdringung in dem einen oder den mehreren Durchdringungsbereichen.

4. Verfahren nach Anspruch 3, ferner aufweisend ein Bestimmen einer Abweichung in der Signaldurchdringung durch ein Vergleichen der Signaldurchdringung vor und nach einem Anpassen der Übertragungssignalwerte der einen oder der mehreren Nachbar-Basisstationen.

5. Verfahren nach Anspruch 4, ferner aufweisend ein Überprüfen (114) der Signaldurchdringung in dem einen oder den mehreren Durchdringungsbereichen durch ein Vergleichen der Abweichung in der Signaldurchdringung mit einem vordefinierten Fehlerschwellenwert.

6. Verfahren nach einem der Ansprüche 1 bis 5, ferner aufweisend ein Vorhersagen einer Signaldurchdringung für einen oder mehrere Standorte, an denen keine UEs anwesend sind, auf Grundlage von Messberichten, die einem oder mehreren UEs in der Nähe von Orten zugehörig sind, an denen keine UEs vorhanden sind.

7. Signaldurchdringungs-Datenverarbeitungseinheit (300) zum Bestimmen einer Signaldurchdringung von einer oder mehreren Nachbar-Basisstationen, aufweisend:

   einen Prozessor (302); und
   einen Arbeitsspeicher (304), der in Datenaustausch mit dem Prozessor verbunden ist, wobei der Arbeitsspeicher durch einen Prozessor ausführbare Anweisungen speichert, die bei Ausführung den Prozessor veranlassen, das Verfahren nach einem der Ansprüche 1 bis 6 auszuführen.

8. Nicht flüchtiges , durch einen Computer lesbares Medium, das einen Satz von durch einen Computer ausführbaren Anweisungen aufweist, die, wenn sie auf einem Datenverarbeitungssystem ausgeführt werden, das Datenverarbeitungssystem veranlassen, das Verfahren nach einem der Ansprüche 1 bis 6 auszuführen.

## Revendications

1. Méthode de détermination de la pénétration d'un signal pour une ou plusieurs stations de base voisines dans une zone de couverture d'une station de base de desserte, la méthode comprenant :

   la réception (102), par un dispositif de calcul de pénétration de signal, de rapports de mesure d'une pluralité d'équipements utilisateur, UE, associés à la station de base de desserte, l'un ou plusieurs rapports de mesure comprenant des valeurs de puissance reçue de signal de référence, RSRP, de la ou de plusieurs stations de base voisines ;
   la comparaison, par le dispositif de calcul de pénétration de signal, des valeurs RSRP de la ou de plusieurs stations de base voisines dans les rapports de mesure avec un seuil RSRP prédéfini afin d'identifier des mesures dépassant le seuil RSRP prédéfini ;
   l'identification (104), par le dispositif de calcul de pénétration de signal, d'un emplacement de chaque UE d'après les mesures identifiées sur la base du ou de plusieurs rapports de mesure ; la détermination (106), par le dispositif de calcul de pénétration de signal, de distances entre une ou plusieurs paires d'UE d'après les mesures identifiées sur la base de l'emplacement de chaque UE, chaque UE étant un point de mesure ; la définition (108), par le dispositif de calcul de pénétration de signal, d'une ou plusieurs zones de pénétration sur les distances déterminées, chaque zone de pénétration étant définie par trois ou plusieurs points de mesure, la distance entre deux quelconques des trois ou plusieurs points de mesure étant inférieure à un seuil de distance prédéfini ; et la détermination (110), par le dispositif de calcul de pénétration de signal, d'une pénétration de signal par la ou de plusieurs stations de base voisines dans la ou plusieurs zones de pénétration basées sur des valeurs RSRP de stations de base voisines mesurées par des UE formant des sommets de la ou plusieurs zones de pénétration.

**2.** Méthode selon la revendication 1, la pénétration du signal dans la ou plusieurs zones de pénétration étant déterminée à l'aide d'une méthode de perte de trajet.

**3.** Méthode selon la revendication 1 ou 2, comprenant en outre l'ajustage (112) de valeurs du signal de transmission de la ou de plusieurs stations de base voisines d'après la pénétration de signal dans l'une ou plusieurs zones de pénétration.

**4.** Méthode selon la revendication 3, comprenant en outre la détermination d'une déviation de la pénétration du signal en comparant la pénétration du signal avant et après l'ajustage des valeurs du signal de transmission de la ou de plusieurs stations de base voisines.

**5.** Méthode selon la revendication 4, comprenant en outre la vérification (114) de la pénétration du signal dans la ou plusieurs zones de pénétration, en comparant la déviation de la pénétration du signal avec un seuil d'erreur prédéfini.

**6.** Méthode selon une quelconque des revendications 1 à 5, comprenant en outre la prédiction de la pénétration du signal pour un ou plusieurs emplacements où ne se trouvent pas d'UE, d'après des rapports de mesure associés avec un ou plusieurs UE à proximité des emplacements où ne se trouvent pas d'UE.

**7.** Dispositif de calcul de la pénétration du signal (300) pour la détermination de la pénétration du signal d'une ou plusieurs stations de base voisines, comprenant :

un processeur (302) ; et une mémoire (304) couplée en communication au processeur, la mémoire mémorisant des instructions exécutables par le processeur, qui, lors de leur exécution, engendrent l'exécution, par le processeur, de la méthode selon une quelconque des revendications 1 à 6.

**8.** Support non transitoire lisible par ordinateur comprenant un ensemble d'instructions exécutables par un ordinateur, qui, lors de leur exécution dans un système informatique, engendrent l'exécution, par le système informatique, de la méthode selon une quelconque des revendications 1 à 6.

100

FIG. 1

```
                    ┌──────────────┐
                    │    Start     │
                    └──────┬───────┘
                           │
                           ▼
┌──────────────────────────────────────────────────────┐
│ Receive one or more measurement reports from one or    │     ╭─102
│ more User Equipment (UEs) associated with a serving    │  ⌇
│ base station                                           │
└──────────────────────────┬─────────────────────────────┘
                           │
                           ▼
┌──────────────────────────────────────────────────────┐
│ Identify a location of each of the one or more UEs     │     ╭─104
│ based on the one or more measurement reports           │  ⌇
└──────────────────────────┬─────────────────────────────┘
                           │
                           ▼
┌──────────────────────────────────────────────────────┐
│ Determine a distance between one or more pairs of UEs  │     ╭─106
│ based on the location of the each UE                   │  ⌇
└──────────────────────────┬─────────────────────────────┘
                           │
                           ▼
┌──────────────────────────────────────────────────────┐
│ Define one or more penetration areas based on the one  │     ╭─108
│ or more distances between the one or more pairs of UEs,│  ⌇
│ wherein the one or more penetration areas are          │
│ associated with the one or more neighbor base stations │
└──────────────────────────┬─────────────────────────────┘
                           │
                           ▼
┌──────────────────────────────────────────────────────┐
│ Determine signal penetration in the one or more        │     ╭─110
│ penetration areas based on the one or more pairs of    │  ⌇
│ UEs associated with each of the penetration areas      │
└──────────────────────────┬─────────────────────────────┘
                           │
                           ▼
┌──────────────────────────────────────────────────────┐
│ Adjust transmission power of the one or more           │     ╭─112
│ neighboring base stations based on the determined      │  ⌇
│ signal penetration                                     │
└──────────────────────────┬─────────────────────────────┘
                           │
                           ▼
┌──────────────────────────────────────────────────────┐
│ Verify the signal penetration values based on the      │     ╭─114
│ adjusted transmission power of the one or more         │  ⌇
│ neighboring base stations                              │
└──────────────────────────┬─────────────────────────────┘
                           │
                           ▼
                    ┌──────────────┐
                    │     End      │
                    └──────────────┘
```

**FIG. 2**

300

302

Processor

304

Memory

FIG. 3

**FIG. 4**: Example Computer System

**EP 3 076 702 B1**

**REFERENCES CITED IN THE DESCRIPTION**

**Patent documents cited in the description**

- US 20110256833 A1